# EUROPEAN PATENT APPLICATION

(11) **EP 2 955 685 A1**
(43) Date of publication of application: **16.12.2015**
(21) Application number: 15171366.6
(22) Date of filing: 10.06.2015
(51) Int. Cl.: G06Q 30/06, G06Q 30/02

(54) **INTERACTIVE VENDING SYSTEM AND METHOD FOR SELLING GOODS IN BOTH ACTUAL EXHIBIT SPOT AND ONLINE SHOP**

(30) Priority: 11.06.2014 TW 103120181
(71) Applicant: Staging Design Inc., New Taipei City 242 (TW)
(72) Inventor: LEE, Chung-Pin, 242 New Taipei City (TW)
(74) Representative: Viering, Jentschura & Partner mbB Patent- und Rechtsanwälte

(57) **Abstract**

Disclosure herein is related to a vending system and a method for selling goods such as furnishings or artwork both in an actual exhibit spot (243) and online shop. According to one of the embodiments, the system allows consumer to browse the goods displayed in an actual exhibit spot (243), and complete a purchase order when he manipulates a terminal device (22) to read identification tags of interested items. The read IDs are then transmitted to a server (20). In the server (20), the corresponding goods information such as purchase data can be obtained and sent to the terminal device (22). The server (20) may go on follow-up checkout and shipping procedure. In particular, the actual exhibit spot (243) is such as the house to be sold where the goods are displayed. Not only could the consumer visit the open house, but also to shop the designed items simultaneously.

## Description

### BACKGROUND

### 1. Technical Field

The present invention is generally related to an interactive vending system and method for both actual exhibit spot and one-line shop, in particular, to the system and method allowing a user to select and purchase furnishing at the actual exhibit spot.

### 2. Description of Related Art

When a common customer want to purchase the household commodities, furniture, decorations, or art pieces for decoration or general use, he may first consider going to a real store or shopping mall. Under this circumstance, the customer decides if buying an item or determines if the item fits his living environment only through the simple furnishings at the site or his personal preference.

Further, when the customer chooses the item via an online shop over network, the much simpler figure or brief text may be the only reference for the decision. The customer may be merely based on his preference or imagination according to the online information.

Still further, the above-mentioned methods for the customer to purchase any household item though the exhibit site or online shop; it occurs a drawback that it is inconvenient to return the product when the item has been delivered. For example, the customer feels it is an inappropriate item for the household space, such as the item has wrong size, the real material meets great difference from the photo, or the item is not suitable to the original household furnishings. The return procedure will cost the customer time and money.

### SUMMARY

In view of the restrictions on the conventional method for the user to decide if buying the articles only by visiting actual shop or website exhibition, an interactive vending system for selling goods at both actual exhibit spot and online shop with e-commerce manner is provided. In particular, for promoting sale, the system allows the user to experience visiting the house object with decoration for sale such as at an actual exhibit spot. Further in one embodiment, the interactive vending system in accordance with the present invention allows the customer to purchase a furnishing element, such as furniture or art piece, placed in a house object for sale. The house object is such as secondhand house, show house, or new real estate which acts as a temporary exhibit spot. The system allows the customer to experience the site with real decoration.

According to one of the embodiments, the method for selling the furnishing at an actual exhibit spot is applicable to a serving system. The system allows the user using a terminal device to read the identification tag on every element when he looks around the furnishing elements, or including art pieces, at the actual exhibit spot. Since every element is associated with an identification tag, the terminal device can have the identification information for every element as reading the tag. While the serving system receives the identification information from the terminal device, the system performs a comparison with the database so as to acquire the data with respect to the furnishing. The data is such as purchase information for every furnishing element. The purchase information is then transmitted to the terminal device. When the user affirms the purchase information, the serving system again receives an order from the terminal device. After that, the system continuously completes the subsequent procedure such as check-out process and delivery.

According to the embodiment, the actual exhibit spot is a house object for sale. The decoration in the exhibit spot is such as the furnishing elements provided for the user to purchase. The system then receives the selection made by the terminal device as reading the identification tag(s) on the one or more furnishing elements at the actual exhibit spot. The combination of the selected furnishing elements, in the serving system, is provided for the system to render decoration advice and style analysis.

In one embodiment, the method for selling furnishing at the actual exhibit spot is performed by the serving system which renders a menu of furnishing elements. The user uses the terminal device to make selection. The system receives the selection signal regarding one or more furnishing elements made by the terminal device through the menu. The system performs comparison for the identification information using the database. The system then acquires information for the furnishings, at least including purchase information and the actual exhibit spot related to the furnishing element(s). The result is then transmitted to the terminal device. After that, the system receives an order from the terminal device when the user confirms the purchase information for one or more selection elements. The purchase is completed. Alternatively, the user can directly order the one or more furnishing elements, including art pieces, by using the terminal device to read the identification for every furnishing element at the actual exhibit spot.

The further embodiment shows the vending system for selling the furnishing elements at the actual exhibit spot includes a serving system. The serving system includes a communication module for linking the terminal device, a database module for recording information relating to the furnishing elements, and a data processing module used to process data and orders.

In order to further understand the techniques, means and effects of the present disclosure, the following detailed descriptions and appended drawings are hereby referred to, such that, and through which, the purposes, features and aspects of the present disclosure can be thoroughly and concretely appreciated; however, the appended drawings are merely provided for reference and illustration, without any intention to be used for limiting the present disclosure.

### BRIEF DESCRIPTION OF THE DRAWINGS

Fig. 1 shows a schematic diagram depicting the vending system for selling furnishings at the actual exhibit spot in accordance with the present invention;
Fig. 2 shows a diagram describing the functions performed by the vending system in one embodiment of the present invention;
Fig. 3 shows a flow chart depicting the method for selling furnishings at the actual exhibit spot in one embodiment of the present invention;
Fig. 4 shows a flow chart depicting the method for selling furnishings at the actual exhibit spot in one embodiment of the present invention;
Fig. 5 shows a flow chart depicting the method in another embodiment of the present invention;
Fig. 6 shows a flow chart describing the method in one further embodiment of the present invention.

### DESCRIPTION OF THE EXEMPLARY EMBODIMENTS

Reference will now be made in detail to the exemplary embodiments of the present disclosure, examples of which are illustrated in the accompanying drawings. Wherever possible, the same reference numbers are used in the drawings and the description to refer to the same or like parts.

In a situation of selling a house object, no matter the new house or secondhand house, a basic decoration and arrangement may be required for promoting sale so as to reach a deal. However the seller always puts up decoration arbitrarily, or places some simple decorations or models without reaching any design.

Further, the traditional real estate agents may only try to advertise the house object via traditional medium for promoting the sale. The agent may lead the people in interest to arrive the site of house object for checking the condition. If the object is a new house, some simple decorations or/and infrastructure may be enough to acknowledge the condition of the house object. It is noted that the system in accordance with the present invention may be applicable to the new house. If the object is an old house, the previous decoration may be still there. In another case, the seller may consider to re-decorate or clear the house if he wants to sell an old house effectively. However, it may be costly when the seller decides to re-decorate the house, or hire a designer to re-arrange or re-decorate the house.

In view of above-mentioned problem, the disclosure in accordance with the present invention is related to an interactive vending system for selling furnishing at an actual exhibit spot or even implementing online shop, and a method therefor. The system and method are exemplarily adapted to the house object for rent or for sale. The system and method allow the house object for rent or for sale to be configured to dispose various furnishing, or including art pieces, after an overall design. In particular, the furnishings or the art pieces are the objects provided for the customers to purchase. Therefore, the customer may choose buying the furnishings when he visits the housing for rent or for sale. That means the furnishings arranged in the house are truly for sale. Furthermore, this aspect can promote the sale of the house object because the decoration and arrangement are based on a designer's configuration.

It is worth noting that the furnishing elements mentioned in the disclosure may be the furniture and decorations the average family can see. The furnishing elements may, but not be limited to, include the various art pieces.

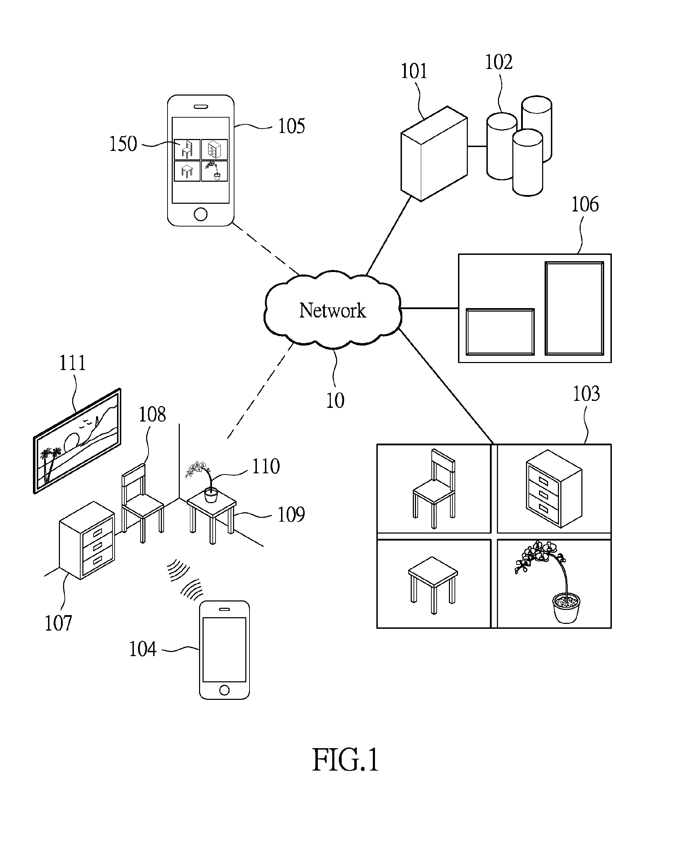

Reference is made to Fig. 1 showing a schematic diagram depicting the vending system for selling the furnishings at the actual exhibit spot in one embodiment of the present invention.

In the present case, a serving system 101 is provided. The serving system 101 is able to be remotely connected and accessed over network 10. The serving system 101 has a database 102 provided for the remote access in order to retrieve the information relating to the furnishings. It is noted that the furnishings may include art pieces, and the information is related to the furnishing retailers, designers, and the styles and descriptions. The information may still be the purchase information for every element. In the database 102, the information relating to location of every actual exhibit spot may be included. The information is the database 102 should be periodically updated and revised. Furthermore, the serving system 101, using the database 102, provides the decoration advice for forming a specific style made by the designer according to the combination of various furnishings.

The serving system 101 may be in connection with the supply retailers 103, and consignment retailers 106 for selling art pieces over network 10. The system allows the retailers 103, 106 to upload the information of furniture, decorations, and arrangement elements, or even the kinds of art pieces. The uploaded data may also include the price for every element, information of designers and their styles.

The users at the terminal may access the database 102 of the serving system 101 using the terminal devices 104, 105. For example, the terminal devices 104, 105 may be installed with APPs for accessing the serving system 101 when the terminal devices 104, 105 are the mobile devices. The access may reach the service of serving system 101 via a webpage or a proprietary browser. As using the terminal devices 104, 105 to read the identification tags on the furnishing elements 107, 108, 109, 110, and 111, the read identification information can be transmitted to the serving system 101 for retrieving the further information. The information may include furnishing element icons 150, the related descriptions and purchase information thereof. The schematic diagram in the present case shows the furnishing elements such as furniture (107, 108, 109), decorations (110), and paintings (111), or the kinds of furnishing elements for decorating the site.

In which, the identification tag on the furnishing may be an electronic tag carrying wireless codes. The electronic tag can be implemented by RFID (Radio Frequency Identification) or NFC (near-field communication) technology. The electronic tag exemplarily records descriptive URL or text relating to the arrangement with respect to the furnishing. Another possible tag is QR code tag. The QR code may also record the information of element, or relate to URL with the description of the element. The user is therefore easily access the information for every furnishing element.

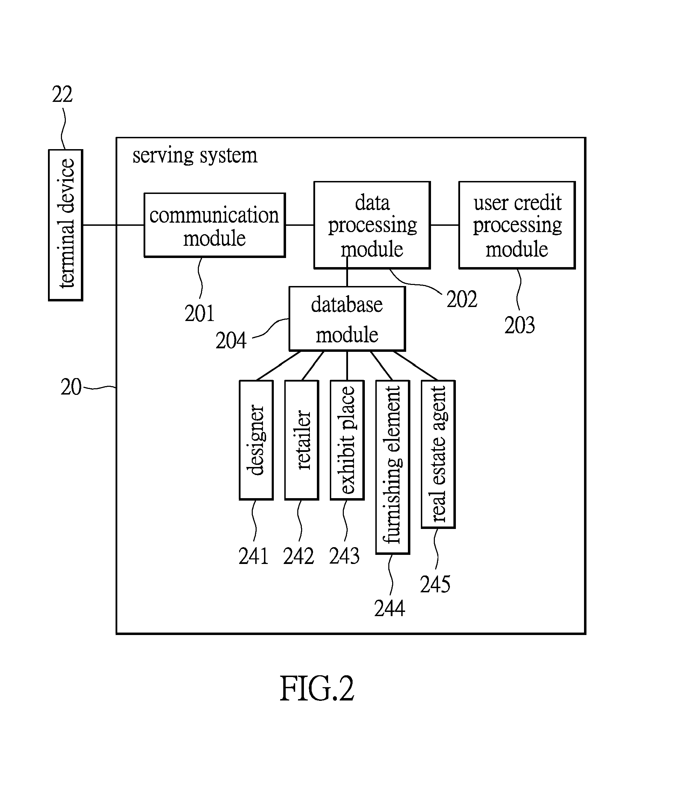

The serving system provides the user the possibility to purchase the furnishing element arranged at the actual exhibit spot. The vending system is referred to Fig. 2 showing the functional blocks describing the system in one embodiment of the present invention.

A serving system 20 is provided to give the service over network. The terminal device 22 is installed with an application program for the service. The serving system 20 includes a communication module 201 to receive data from the terminal device 22. The data sent from the terminal device 22 includes identification information and order information for the every furnishing element. The serving system 20 has a database module 204 which is used to process data in a database. The database records information relating to the furnishing elements particularly. The information includes, but not limited to, purchase information for furnishing element 244, data related to designer 241, information of retailer 242, the actual exhibit spot for the exhibit place 243 exhibiting the furnishing element, and the information related to the real estate agent 245. The data sent to the terminal device 22 may be one or more kinds of data in the database.

When the serving system 20 provides the information of any real estate agent 245, the serving system 20 is connected with a website for publishing the sale information rendered by the real estate agent 245 for retrieving further information such as contact information of sales agents and allotment of commission of the sales agents. For example, the serving system 20 in this case can automatically compute the commission rate for the on-site sale according to the contract set between the sale agent at the exhibit place 243 and the real estate agent (245). The information is for the customer to evaluate the real estate agents.

The serving system 20 has a data processing module 202, which is a hardware or software module for data processing, coupled to the communication module 201 and the database module 204. The data processing module 202 is used to compute the data such as calculation and comparison of the data. The data processing module 202 also processes the requests, inquiries, and orders made from the terminal device. For example, the data processing module 202 processes comparison of the identification data sent by the terminal device using the database, so as to retrieve information relating to the furnishing elements. The serving system 20 is thereby able to deal with the order for furnishing elements.

The serving system 20 includes a user credit processing module 203 in one embodiment. The user credit processing module 203 is used to process the purchase information and credit data sent by various terminal devices. In another embodiment, the user credit processing module 203 allows the system to manage user data, including the history of selection or purchase made by the user, for providing suitable advice and further service.

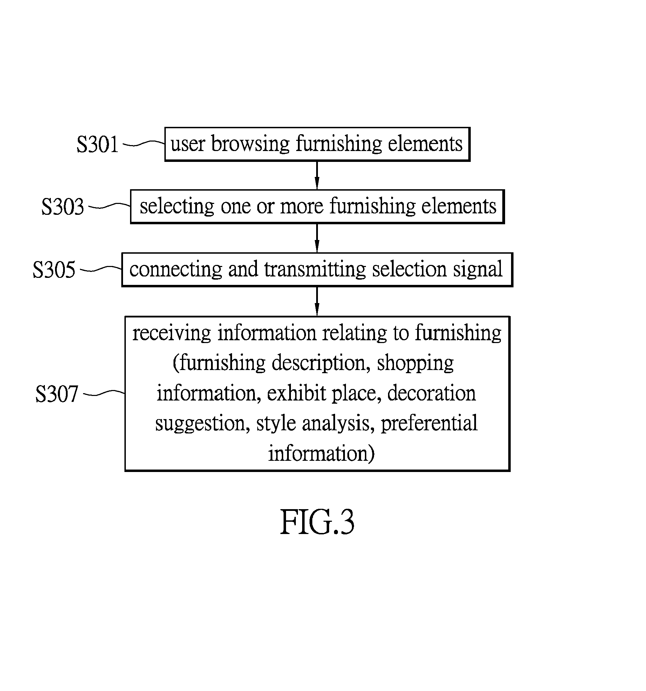

Reference is made to a flow chart shown in Fig. 3.

The actual exhibit spot is decorated with the furnishing elements the user can purchase. In the present embodiment, the system allows the user first browse the furnishing elements on the website. In step S301, the user may operate a browser to browse the furnishing elements using the terminal device. In step S303, one or more furnishing elements are exemplarily selected via a selection interface. The selection interface initiates a menu for showing some items including the art pieces.

When the selection is done, the terminal device is communicated with the serving system via a connection program. In step S305, a selection signal is delivered to the system. When the serving system processes the selection signal, such as in step S307, the terminal device may receive information relating to furnishing description, shopping information, exhibit place, decoration suggestion, style analysis, preferential message.

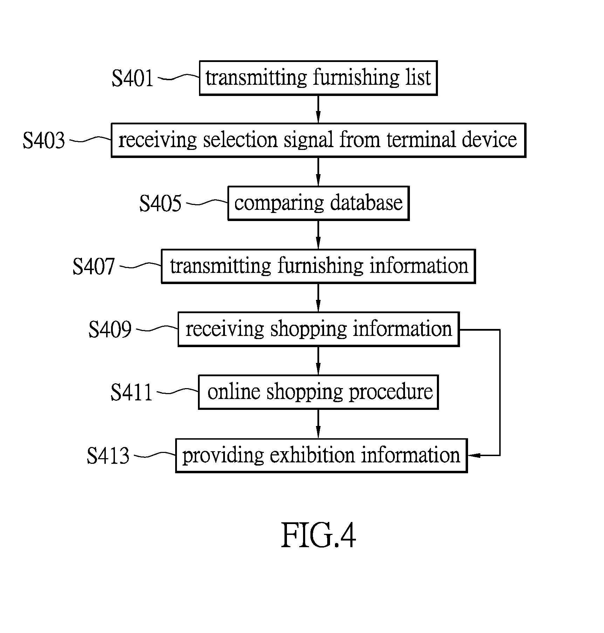

Fig. 4 shows another flow chart describing the process in accordance with the present invention. The method for selling the furnishing at the actual exhibit spot is preferably implemented by a cloud-based service. The cloud-based serving system is constituted by rendering data of kinds of elements such as furniture and decorations, data of the people such as the stores, designers, buyers, the real estate agents, and the exhibit sites. The serving system also performs matching computation. The serving system has a database which records the specification, price, and the price at the exhibit sited, and other price of new article for every element.

In the beginning of the process, the serving system initiates a furnishing menu transmitted to the terminal, such as in step S401. The user may operate the program executed in the terminal device to receive the menu. For example, a web browser may be executed to check the menu. The menu exemplarily records the categories, contents, and prices for kinds of furnishing elements provided for the user to make selection. After selecting one or more items of furnishings on the menu, such as in step S403, the serving system receives a selection signal concerning the selection of one or more furnishing elements. The selection signal carries the identification data related to one or more furnishing elements. In next step S405, a comparison is performed using the database so as to retrieve information relating to the furnishing elements based on the selection signal. The information is then transmitted to the terminal device, such as in step S407. It is noted that the serving system may ask for authenticating every user.

The user then can confirm the data of selected elements using the terminal device. Through the program, the user can check a sum of the prices or any promotion price of selected elements. A purchase data is established when the user confirms the content of the order. In step S409, the serving system receives purchase information and conducts the online shopping procedure, such as in step S411, including the requisite financial and delivery procedure.

It is also noted that, in the present embodiment, rather than the restriction of online shopping using the website exhibition in the conventional technology, the interactive vending system and method for selling the furnishing element at the actual exhibit spot. Especially the system and method are cooperation with the characteristics in that the house object for sale acts as an exhibit site. The system allows the user to arrange the house for sale according to a specific style associated with the user-selected furnishing elements. The secondhand house, show house, or the new house may act as a temporary exhibit spot.

Such as in step S413, the serving system in accordance with the present invention may actively provide the exhibition information for every furnishing element, especially the element selected by the user. In which, in addition to the terminal device transmitting the identification information for every furnishing element, the position information of the terminal device may be transmitted to the serving system. By this position information of the terminal device, the serving system may provide location-based service for the user. For example, the service system determines an exhibit place for the furnishing element according to the GPS data of the terminal device or the interested location selected by the user. When the serving system determines the exhibit places based on the terminal device's position, or the user-selected location, the result for the user's reference may include a sorted list. This aspect allows the user to arrive the exhibit site for checking the furnishing element and determining if he wants to buy. The user may conduct the purchase procedure as reading the identification tag on the furnishing element at the actual exhibit spot.

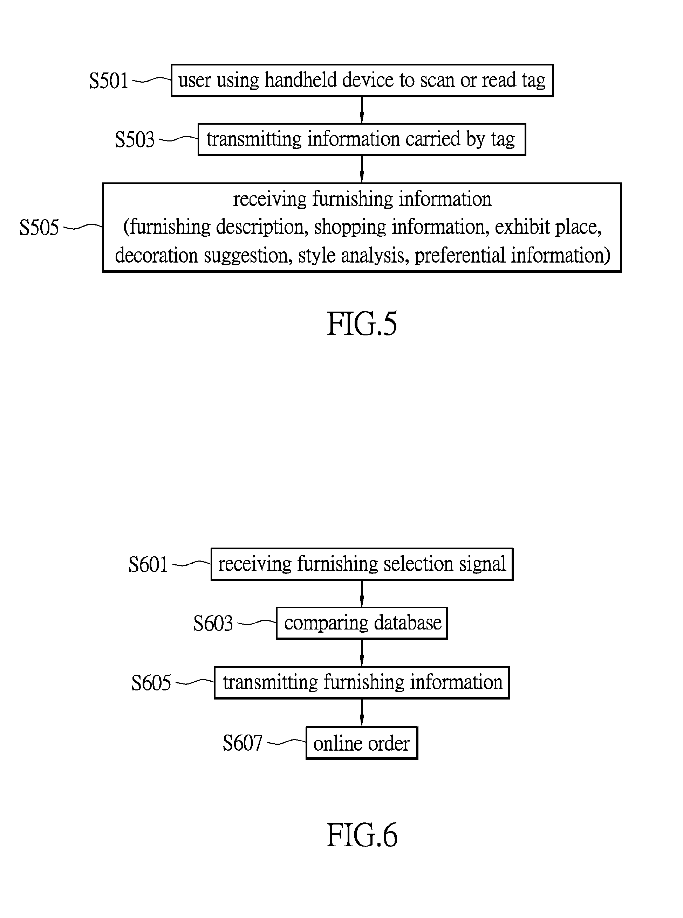

Fig. 5 shows a flow chart exemplarily describing the method for selling the furnishing at the actual exhibit spot.

The actual exhibit spot is such as a house object for rent or for sale. The furnishing elements are arranged in the house object according to a specific style. The actual furnishing element is tagged with the information relating to the element. The identification tag is such as a QR code tag or a NFC tag. The identification tag is provided for the user to conveniently enquire or place an order. The user may also buy the item at the spot.

In the meantime, the user employs an APP executed in the terminal device to read the identification tag in order to enquire the information of furnishing element. In step S501, in one example, the APP is initiated to read the identification tag on the furnishing element for sale. When the user handheld the device to scan the code or to read the tag, the device is communicated with the serving system. The identification information carried by the tag may be transmitted to the serving system, such as in step S503.

When the serving system receives the identification relating to the one or more furnishing elements at the actual exhibit spot from the terminal device, the system performs comparison using the database for retrieving information of one or more furnishing elements. The information is such as information of purchasing the furnishing element. The information of purchase is sent to the terminal device, such as step S505. The serving system performs the comparison for retrieving the information of furnishing elements based on the received identification information. The output of the serving system may include a decoration advice and a style analysis based on a combination of furnishing elements.

The terminal device then receives the furnishing information having the furnishing description, shopping information, exhibit place, decoration advice, style analysis, promotion information, and/or the sales information of the exhibit spot. The serving system will receive the order information made by the terminal device when the user confirms the content of the purchase.

According to one further embodiment, the serving system may provide a decoration advice as determining some styles based on the user's selection when the terminal device generates the selection signal of furnishing element(s). The decoration advice may be a plane view displayed on the screen of the terminal device, or a photo of actual furnishings. Other decoration advice rather than the matched advice may be possibly delivered if they are within a range of style, and the decoration advice may include other furnishing elements exhibited at other actual exhibit spots. It is noted that the decoration advice may include the information of other actual exhibit spots displaying other furnishing elements.

Reference next is made to Fig. 6 showing a flow chart used to describe a method for processing an online order.

In step S601, when the serving system receives the furnishing selection signal relating to purchase information, the system performs a comparison using the database, such as in step S603. The matched furnishing information is then responded to the terminal device, such as in step S605. The user at the terminal makes a decision to conduct an order. The serving system then receives the order from the terminal device. An online order is done, such as in step S607.

Alternatively, when the serving system receives identification information of one or more furnishing elements at the actual exhibit, and the order information, the order can be done when the user confirms the order.

Thus, disclosure herein is related to the interactive vending system for selling the furnishing at the actual exhibit spot or the online shop. The system allows the user or customer to refer to the furnishings in a specific style arrangement at the same time he visits a house object. The user can have the information/purchase information of the furnishing from a cloud-based service when he operates the terminal device to read the tag on the furnishing element in interest. The system then allows the user or customer to purchase the item according to the purchase information, or even based on the decoration advice provided by the serving system, the advice relating to other furnishing elements, styles, and the actual exhibit spots.

The above-mentioned descriptions represent merely the exemplary embodiment of the present disclosure, without any intention to limit the scope of the present disclosure thereto. Various equivalent changes, alterations or modifications based on the claims of the present disclosure are all consequently viewed as being embraced by the scope of the present disclosure.

## Claims

1. A method for selling furnishing at an actual exhibit spot (243), comprising:
receiving identification information for a furnishing element (244), wherein the furnishing element (244) is placed at the actual exhibit spot (243); the identification information is read from an identification tag on the furnishing element (244) by a terminal device (22);
comparing with a database for retrieving furnishing information corresponding to the identification information, wherein the furnishing information at least includes purchase information of the furnishing element;
transmitting the purchase information of the furnishing element to the terminal device (22); and
receiving order information made in the terminal device (22).

2. The method according to claim 1, wherein the actual exhibit spot (243) is a house object for rent or for sale.

3. The method according to claim 2, wherein the furnishing element (244) is one of the plurality of furnishing elements (244) exhibited in the house object for sale.

4. The method according to claim 2, wherein the furnishing element (244) is an art piece.

5. The method according to one of claims 1 through 4, wherein, when the terminal device (22) is used to read more than one identification tag of the furnishing elements (244) at the actual exhibit spot (243), the furnishing information is obtained as comparing with the database, further comprising a decoration advice and a style analysis based on combination of the furnishing elements (244).

6. The method according to claim 5, wherein the decoration advice comprises other furnishing elements (244) at the other actual exhibit spot (243), and the decoration advice also includes the actual exhibit spot (243) where the other furnishing elements (244) locate at.

7. The method according to claim 1, wherein the identification tag is a two-dimensional bar code or an electronic tag.

8. A method for selling furnishing at an actual exhibit spot (243), comprising:
in a serving system (20), providing a menu for furnishing elements (244);
receiving a selection signal regarding one or more furnishing elements (244) based on the menu from a terminal device (22), the selection signal recording identification information for the one or more furnishing elements (244);
comparing with a database, retrieving furnishing information corresponding to identification information for the one or more furnishing elements (244); wherein the furnishing information at least includes purchase information for the one or more furnishing elements (244) and one or more actual exhibit spots (243) having the one or more furnishing elements (244); and
transmitting purchase information for the one or more furnishing elements (244) and the information relating to the actual exhibit spot (243) for every furnishing element (244);
wherein, after transmitting the purchase information for the one or more furnishing elements (244), the serving system (20) receives order information transmitted by the terminal device (22) so as to complete the purchase; or, the purchase is completed when the serving system (20) receives order information and identification information for every furnishing element (244) selected at the actual exhibit spot (243) from the terminal device (22).

9. The method according to claim 8, wherein the actual exhibit spot (243) is a house object for rent or for sale.

10. The method according to claim 8, wherein the identification information for every furnishing element is coded in a 2D bar code or an electronic tag, and the identification information is taken by scanning an identification tag on the every furnishing element (244) by the terminal device (22).

11. A vending system for performing the method for selling furnishing at an actual exhibit spot (243) according to claim 1 or 8, comprising:
a serving system (20), comprising:
a communication module (201), communicating with the terminal device (22) for receiving order information and identification information for every furnishing element (244);
a database module (204) having a database recording information relating to the furnishing elements (244) for purpose of comparison, wherein the database records data relating to purchase information for a plurality of furnishing elements (244), designers (241), furnishing retailers (242), real estate agents (245), and actual exhibit spots (243) exhibiting the furnishing elements (244); and
a data processing module (202), coupled with the communication module (201) and the database module (204), used to compare the database using the identification information for every furnishing element (244) transmitted by the terminal device (22), retrieving information for every furnishing element (244), and process an order for purchasing the one or more furnishing elements (244).

12. The system according to claim 11, wherein the serving system (20) links a website for publishing sales information for the real estate agent over network, so as to retrieve information relating to contact information of sales agents and allotment of commission of the sales agents.
